(19) Europäisches Patentamt
European Patent Office
Office européen des brevets

(11) Publication number: 0 443 687 A2

(12) # EUROPEAN PATENT APPLICATION

(21) Application number: 91200369.6

(22) Date of filing: 20.02.91

(51) Int. Cl.5: C08G 67/02

(30) Priority: 20.02.90 NL 9000398

(43) Date of publication of application:
28.08.91 Bulletin 91/35

(84) Designated Contracting States:
BE DE ES FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Van Broekhoven, Johannes Adrianus Maria
Badhuisweg 3
NL-1031 CM Amsterdam(NL)
Inventor: Stil, Hans Arie
Badhuisweg 3
NL-1031 CM Amsterdam(NL)
Inventor: Keijsper, Johannes Jacobus
Badhuisweg 3
NL-1031 CM Amsterdam(NL)

(74) Representative: Tuijn, Jan Warnaar et al
Shell Internationale Research Maatschappij B.V., Patents, Licensing & Trade Marks Division, P.O. Box 302
NL-2501 CH The Hague(NL)

(54) **Process for the preparation of polymers of carbon monoxide with one or more olefinically unsaturated compounds.**

(57) Process for the preparation of polymers, in which linear polymers of carbon monoxide with one or more olefinically unsaturated compounds in which polymers the units originating from carbon monoxide and the units originating from the olefinically unsaturated compounds are present in a substantially alternating order are prepared by contacting the monomers at elevated temperature and pressure and substantially in the absence of a liquid non-polymerizable diluent with a catalyst based on

a) a Group VIII metal compound,

b) an anion of an acid with a pKa of at least 2, in a quantity of at least 5 mol per mol of the Group VIII metal, and

c) a dentate ligand containing at least two phosphorus-, nitrogen- or sulphur-containing dentate groups which dentate ligand can form a complex with the Group VIII metal.

EP 0 443 687 A2

The invention relates to a process for the preparation of polymers of carbon monoxide with one or more olefinically unsaturated compounds.

Linear polymers of carbon monoxide with one or more olefinically unsaturated compounds in which polymers the units originating from carbon monoxide and the units originating from the olefinically unsaturated compounds are present in a substantially alternating order can be prepared by contacting the monomers at elevated temperature and pressure with a catalyst based on:

a) a Group VIII metal compound,

b) an anion of an acid, and

c) a dentate ligand containing at least two phosphorus-, nitrogen- or sulphur-containing dentate groups which dentate ligand can form a complex with the Group VIII metal.

Hitherto, the preparation of the polymers using the above-mentioned catalysts has mainly been carried out as liquid phase polymerization, with the monomers being contacted with a solution of the catalyst in a liquid non-polymerizable diluent in which the polymers were almost or completely insoluble. During the polymerization the polymers are obtained in the form of a suspension in the diluent. After the required degree of polymerization has been reached, the polymerization is generally terminated by cooling and releasing the pressure. The polymers are isolated from the suspension, for example by filtration or centrifuging. The pure diluent to be used in a subsequent polymerization is recovered from the remaining liquid, e.g. by distillation.

It was discovered during an investigation by the applicant into the above-mentioned liquid phase polymerization that the polymerization activity of the catalysts is determined to a large extent by the strength of the acid from which the anion named as component b) is derived. On the basis of the contribution made by component b) to the polymerization activity, the acids can be classified into two classes, viz. strong acids with a pKa of less than 2, such as oxalic acid and methylsulphonic acid, and weak acids with a pKa of at least 2, such as tartaric acid. It was found that catalysts containing as component b) an anion of a strong acid for the above-mentioned liquid phase polymerization exhibit a high polymerization activity, whereas the inclusion in the catalyst of an anion of a weak acid as component b) results in only a low polymerization rate. In view of the above, it was hitherto customary in liquid phase polymerization for the preparation of the present polymers to employ catalysts containing an anion of a strong acid as component b).

During a previous investigation by the applicant it was found that the present polymer preparation can be carried out not only as liquid phase polymerization but also as gas phase polymerization. Gas phase polymerization is characterized in that the monomers are contacted with the catalyst substantially in the absence of a liquid non-polymerizable diluent. For the preparation of the polymers on an industrial scale, gas phase polymerization is much to be preferred to liquid phase polymerization because in gas phase polymerization the above-mentioned filtration or centrifuging step, as well as the distillation step, can be omitted. When implemented on an industrial scale, these separation and purification steps would involve considerable costs.

The applicant has carried out an extensive investigation into gas phase polymerization for the preparation of the present polymers using the above-mentioned catalysts. On the assumption that the same rules would apply to the optimum composition of the catalyst as had been found for liquid phase polymerization, the catalysts initially used in the experimental programme for gas phase polymerization contained an anion of a strong acid as component b). The results were disappointing. Contrary to expectations, only low polymerization rates were observed.

During the applicant's investigation into gas phase polymerization for the preparation of the present polymers it was surprisingly found, completely contrary to what had previously been observed in liquid phase polymerization, that catalysts containing an anion of a weak acid as component b) possess a high polymerization activity and therefore give rise to high polymerization rates, provided that the anion is present in a relatively large amount, relative to the Group VIII metal compound.

The present patent application therefore relates to a process for the preparation of polymers in which linear polymers of carbon monoxide with one or more olefinically unsaturated compounds in which polymers the units originating from carbon monoxide and the units originating from the olefinically unsaturated compounds are present in a substantially alternating order are prepared by contacting the monomers at elevated temperature and pressure and substantially in the absence of a liquid non-polymerizable diluent with a catalyst based on

a) a Group VIII metal compound,

b) an anion of an acid with a pka of at least 2, in a quantity of at least 5 mol per mol of the Group VIII metal, and

c) a dentate ligand containing at least two phosphorus-, nitrogen- or sulphur-containing dentate groups which dentate ligand can form a complex with the Group VIII metal.

To improve the behaviour of the catalysts, the gas phase polymerization in accordance with the invention is preferably carried out in the presence of a small quantity of an alcohol and/or hydrogen.

In particular, the lower alcohols such as methanol, ethanol, propanol, iso-propanol, butanol and iso-butanol are very suitable alcohols. The use of methanol is particularly preferred. If the process is carried out in the presence of an alcohol, the quantity of alcohol used should be chosen so small that during polymerization the alcohol occurs substantially in the gas phase.

As regards the way in which, during gas phase polymerization, the catalyst is introduced into the monomer mixture to be polymerized, various possibilities can be distinguished. Firstly, the catalyst as such, i.e. without carrier material, can be introduced into the polymerization reactor. If desired, the catalyst can be dissolved or suspended in a liquid diluent prior to introduction into the reactor and, after the solution or suspension has been introduced, for example by spraying, the diluent can be substantially removed. Examples of suitable diluents are alcohols such as methanol, hydrocarbons such as toluene, ketones such as acetone, esters such as methyl propionate and ethers such as diethyl ether. Preferably an alcohol, and in particular methanol, is used as diluent. If an alcohol is used, its removal is carried out such that a small quantity remains behind in the catalyst. The gas phase polymerization according to the invention is preferably carried out using the catalyst applied to a carrier material. The application of the catalyst to the carrier material can be accomplished very suitably by contacting the carrier material with a solution or suspension of the catalyst in a liquid diluent and then substantially removing the diluent. As diluents, the previously mentioned diluents can be used, alcohols and in particular methanol being preferred in this case as well. If an alcohol is used, its removal is carried out such that a small quantity remains behind on the carrier. As carrier material, a porous carrier material is preferably chosen. Both inorganic and organic carrier materials can be used as catalyst carrier materials. Examples of suitable carrier materials are silica, alumina, talc, charcoal, cellulose, dextrose and dextran gel. Polymers such as polyethylene, polypropylene and polystyrene can also be used as carrier materials. Carrying out the gas phase polymerization with the catalyst applied to a carrier material results in products in which the prepared polymer occurs together with the carrier material used. Depending on the nature and quantity of the carrier material, products with very varying properties and applications can be prepared. If desired, the carrier material can be wholly or partly removed from the product after the end of the polymerization by treating the product with a solvent in which the carrier material is soluble but the prepared polymer is insoluble.

In the gas phase polymerization according to the invention, in particular, a polymer whose structure and composition corresponds substantially to that of the polymer to be prepared is used as a carrier material for the catalyst. Polymers prepared both by liquid phase polymerization and by gas phase polymerization can be used for this purpose.

In this patent application, Group VIII metals are understood to be the noble metals ruthenium, rhodium, palladium, osmium, iridium and platinum, as well as the iron group metals iron, cobalt and nickel. Catalysts containing a Group VIII metal selected from palladium, nickel and cobalt are preferably used in the process according to the invention. Palladium is particularly preferred as Group VIII metal. The Group VIII metal is preferably incorporated in the catalyst in the form of a salt of a carboxylic acid, in particular in the form of an acetate.

The catalysts used in the process according to the invention should contain an anion of an acid with a pKa of at least 2 as component b). Preferably they contain an anion of an acid with a pka of less than 6. Component b) can be introduced into the catalyst either in the form of a compound from which the desired anion splits off or in the form of a mixture of compounds from which the desired anion is formed by mutual reaction. Both mineral acids and organic acids can be used as acids with a pKa of at least 2 whose anion should be present in the catalyst as component b). Examples of suitable mineral acids are phosphoric acid, arsenic acid, nitrous acid and selenous acid. Examples of suitable organic acids are tartaric acid, 2,5-dihydroxybenzoic acid, acetoacetic acid, cyanoacetic acid, 2-cyanophenoxyacetic acid, glycolic acid, 2-fluorobenzoic acid, ortho-phthalic acid, citric acid, ascorbic acid and 2-furancarboxylic acid. Component b) may be included in the catalyst in the form of an acid. If desired, component b) can also be included in the catalyst in the form of a main group metal salt or a non-noble transition metal salt of the corresponding acid. Component b) can be included in the catalyst in the form of a carboxylic acid or in the form of a derivate thereof, such as an alkyl or aryl ester, an amide, an imide, an anhydride, an ortho-ester, a lactone, a lactam or an alkylidine dicarboxylate. Very favourable results were obtained in the process according to the invention by using catalysts in which component b) was included in the form of an acid selected from the group formed from phosphoric acid, tartaric acid, citric acid and ascorbic acid.

Component b) is preferably present in the catalysts in a quantity of 7 to 200 and in particular 10 to 100 mol per mol Group VIII metal.

In addition to components a) and b), the catalyst used in the process according to the invention should include as component c) a dentate ligand

containing at least two phosphorus-, nitrogen- or sulphur-containing dentate groups which dentate ligand can form a complex with the Group VIII metals.

If a dentate ligand is used in the catalysts as component c) that can form a complex with the Group VIII metal via sulphur-containing dentate groups, a component c) is preferred with the general formula $R^1S$-R-$SR^1$ in which $R^1$ is an optionally polarly substituted hydrocarbyl group and R represents a divalent organic bridging group containing at least two carbon atoms in the bridge. Examples of such compounds are 1,2-bis(ethylthio)ethane, cis-1,2-bis(benzylthio)-ethene and 1,2-bis-(phenylthio)propane.

If a dentate ligand is used in the catalysts as component c) that can form a complex with the Group VIII metal via nitrogen-containing dentate groups, a component c) is preferred with the general formula

```
  X       X
 / \     / \
N  =  C-C  =  N
```

in which X represents an organic bridging group containing three or four atoms in the bridge, of which at least two are carbon atoms. Examples of such compounds are 2,2'-bipyridine and 1,10-phenantroline.

Preferably, a dentate ligand is used in the catalysts as component c) that can form a complex with the Group VIII metal via phosphorus-containing dentate groups. Although such dentate ligands may contain more than two dentate groups, such as the tetradentate ligand 1,8-bis[bis(2-methoxyphenyl)-phosphino]-2,7-bis-[bis(2-methoxyphenyl)-phosphinomethyl]octane, bidentate ligands are preferred. If such a dentate ligand is used as component c), a compound with the general formula $(R^1)_2P$-R-$P(R^1)_2$ is preferred in which R and $R^1$ have the meanings indicated previously. In this case, particular preference is given to a compound in which $R^1$ represents an aryl group carrying an alkoxy group, preferably having up to 4 carbon atoms, as substituent at the ortho position relative to the phosphorus atom to which it is linked and R contains three atoms in the bridge. An example of such a compound is 1,3-bis[bis(2-methoxyphenyl)-phosphino]propane.

If a dentate ligand is used in the catalysts as component c) that can form a complex with the Group VIII metal via sulphur- or nitrogen-containing dentate groups, the quantity employed is preferably 0.5-100 and in particular 1-50 mol per mol Group VIII metal. If a dentate ligand is used that can form a complex with the Group VIII metal via phosphorus-containing dentate groups, the quantity employed is preferably 0.5-2 and in particular 0.75-1.5 mol per mol Group VIII metal.

To enhance the activity of the catalysts, an organic oxidant can also be included therein as component d). Organic nitrocompounds, such as nitrobenzene are very suitable for this purpose. The quantity of the organic oxidant used is preferably 5-5000 and in particular 10-1000 mol per mol Group VIII metal.

Olefinically unsaturated compounds which, in accordance with the invention, can be polymerized with carbon monoxide include compounds consisting exclusively of carbon and hydrogen, as well as compounds which in addition to carbon and hydrogen also contain one or more heteroatoms. The process according to the invention is preferably employed for the preparation of polymers of carbon monoxide with one or more olefinically unsaturated hydrocarbons. Examples of suitable hydrocarbon monomers are ethene, propene, butene-1, hexene-1 and octene-1, styrene, cyclopentene, norbornene and dicyclopentadiene. In particular, the process according to the invention is very suitable for use in the preparation of copolymers of carbon monoxide with ethene and the preparation of terpolymers of carbon monoxide with ethene and an α-olefin, in particular propene.

The quantity of catalyst used in the process according to the invention can vary within wide limits. Preferably, the quantity of catalyst employed per mol olefinically unsaturated compound to be polymerized contains $10^{-7}$ to $10^{-3}$ and in particular $10^{-6}$ to $10^{-4}$ mol Group VIII metal.

The polymerization is preferably carried out at a temperature of 25-150 °C and a pressure of 2-150 bar and in particular at a temperature of 30-130 °C and a pressure of 5-100 bar. The molar ratio of the olefinically usaturated compounds relative to carbon monoxide is preferably 10:1 to 1:10 and in particular 5:1 to 1:5. The polymer preparation according to the invention can be carried out batchwise or continuously.

The invention will now be illustrated with reference to the following examples.

Example 1

A carbon monoxide/ethene copolymer was prepared as follows. Into a mechanically stirred autoclave with a capacity of 300 ml a catalyst solution was introduced containing
50 ml methanol,
0.1 mmol palladium acetate,
2 mmol tartaric acid, and
0.15 mmol 1,3-bis[bis(2-methoxyphenyl)-phosphino] propane.

After the air present in the autoclave had been displaced by nitrogen and the contents of the autoclave had been brought to 90 °C, a 1:1 carbon monoxide/ethene mixture was introduced into the autoclave until a pressure of 55 bar was reached. During the polymerization the pressure was maintained at 55 bar by introducing a 1:1 carbon monoxide/ethene mixture. After 2 hours the polymerization was terminated by cooling the reaction mixture to room temperature and releasing the pressure. The copolymer was filtered off, washed with methanol and dried. 19.1 g copolymer was obtained. The polymerization rate was 0.9 kg copolymer/(g palladium.hour).

Example 2

A carbon monoxide/ethene copolymer was prepared in virtually the same manner as in example 1, but with the difference that a catalyst solution was used containing
50 ml methanol,
0.01 mmol palladium acetate,
0.2 mmol oxalic acid, and
0.0105 mmol 1,3-bis[bis(2-methoxyphenyl)-phosphino]-propane.

20.0 g copolymer was obtained. The polymerization rate was 9.4 kg copolymer/(g palladium.hour).

Example 3

A carbon monoxide/ethene copolymer was prepared in virtually the same manner as in example 2, but with the following differences

a) the catalyst solution contained 0.2 mmol methylsulphonic acid instead of oxalic acid, and
b) the reaction temperature was 89 °C instead of 90 °C.

22.3 g copolymer was obtained. The polymerization rate was 10.5 kg copolymer/(g palladium.hour).

Example 4

A carbon monoxide/ethene copolymer was prepared as follows. A catalyst was prepared by absorbing a catalyst solution comprising
2 ml methanol,
0.026 mmol palladium acetate,
0.511 mmol oxalic acid, and
0.029 mmol 1,3-bis[bis(2-methoxyphenyl)-phosphino]-propane
on 5 g of an alternating carbon monoxide/ethene copolymer. The catalyst thus prepared was introduced into a mechanically stirred autoclave with a capacity of 300 ml. After the air present in the autoclave had been displaced by nitrogen and the contents of the autoclave had been brought to 89 °C, a 1:1 carbon monoxide/ethene mixture was forced in until a pressure of 55 bar was reached. During the polymerization the pressure was maintained at 55 bar by introducing a 1:1 carbon monoxide/ethene mixture. After 16 hours the polymerization was terminated by cooling the reaction mixture to room temperature and releasing the pressure. 31.4 g copolymer was obtained. The polymerization rate was 0.6 kg copolymer/(g palladium.hour).

Example 5

A carbon monoxide/ethene copolymer was prepared in virtually the same manner as in example 4, but with the following differences:

a) a catalyst solution was used containing
2 ml methanol,
0.0095 mmol palladium acetate,
0.19 mmol methylsulphonic acid, and
0.0104 mmol 1,3-bis[bis(2-methoxyphenyl)-phosphino]propane,
b) the reaction temperature was 93 °C instead of 89 °C, and
c) the reaction time was 18 hours instead of 16 hours.

15.0 g copolymer was obtained. The polymerization rate was 0.6 kg copolymer/(g palladium.hour).

Example 6

A carbon monoxide/ethene copolymer was prepared in virtually the same manner as in example 5, but with the following differences:

a) the catalyst solution contained 0.19 mmol citric acid instead of methylsulphonic acid, and
b) the reaction time was 2.4 hours instead of 18 hours.

21.0 g copolymer was obtained, having a limiting viscosity number (LVN) of 3.8 dl/g, which LVN was determined in hexafluoroisopropanol at 35 °C. The polymerization rate was 6.6 kg copolymer/(g palladium.hour).

Example 7

A carbon monoxide/ethene copolymer was prepared in virtually the same manner as in example 5, but with the following differences:

a) the catalyst solution contained 0.10 mmol citric acid instead of methylsulphonic acid,
b) the reaction temperature was 89 °C instead of 93 °C, and
c) the reaction time was 5.2 hours instead of 18 hours.

20.1 g of copolymer was obtained having an

LVN of 4.6 dl/g, which LVN was determined in hexafluoroisopropanol at 35 °C. The polymerization rate was 3.8 kg copolymer/(g palladium.h).

## Example 8

A carbon monoxide/ethene copolymer was prepared in virtually the same manner as in example 5, but with the following differences:

a) the catalyst solution contained 0.04 mmol citric acid instead of methylsulphonic acid,

b) the reaction temperature was 89 °C instead of 93 °C, and

c) the reaction time was 17 hours instead of 18 hours.

31.2 g of copolymer was obtained having an LVN of 4.9 dl/g, which LVN was determined in hexafluoroisopropanol at 35 °C. The polymerization rate was 1.9 kg copolymer/(g palladium.h).

## Example 9

A carbon monoxide/ethene copolymer was prepared in virtually the same manner as in example 5, but with the following differences:

a) the catalyst solution contained 0.19 mmol phosphoric acid instead of methylsulphonic acid,

b) the reaction temperature was 87 °C instead of 93 °C, and

c) the reaction time was 8.8 hours instead of 18 hours.

57.8 g copolymer was obtained. The polymerization rate was 6.0 kg copolymer/(g palladium.hour).

## Example 10

A carbon monoxide/ethene copolymer was prepared in virtually the same manner as in example 5, but with the following differences:

a) the catalyst solution contained 0.19 mmol ascorbic acid instead of methylsulphonic acid, and

b) the reaction time was 5.6 hours instead of 18 hours.

25.8 g copolymer was obtained. The polymerization rate was 3.7 kg copolymer/(g palladium.hour).

## Example 11

A carbon monoxide/ethene copolymer was prepared in virtually the same manner as in example 5, but with the following differences:

a) the catalyst solution contained 0.19 mmol tartaric acid instead of methylsulphonic acid,

b) the reaction temperature was 91 °C instead of 93 °C, and

c) the reaction time was 2 hours instead of 18 hours.

18.6 g copolymer was obtained. The polymerization rate was 6.8 kg copolymer/(g palladium.hour).

Of the examples 1-11, examples 6, 7, 9, 10 and 11 are in accordance with the invention. In these examples the polymerizations were carried out as gas phase polymerizations using catalysts containing an acid with a pKa of at least 2 as component b) which acid was present in a quantity of at least 5 mol per mol palladium. The examples 1-5 and 8 fall outside the scope of the invention. They are included in the patent application for comparison. In the examples 1-3 the polymerizations were carried out as liquid phase polymerizations. In the examples 4 and 5, although the polymerizations were carried out as gas phase polymerizations, catalysts were used which contained an acid with a pKa of less than 2 as component b). In example 8 the polymerization was carried out as a gas phase polymerization, using an acid with a pKa of at least 2 as component b), but the acid was present in a quantity of less than 5 mol per mol palladium.

The powerful influence of the strength of the acid used in the catalyst preparation on the polymerization activity of the catalysts is clearly seen by comparing the polymerization rates obtained in the examples 1-5 and 11. For the liquid phase polymerization, the catalysts on the basis of oxalic acid and methylsulphonic acid (both with pKa <2) give polymerization rates of 9.4 and 10.5 kg/(g.hour) respectively, and the one on the basis of tartaric acid (pKa >2) gives a polymerization rate of only 0.9 kg/(g.hour). With the gas phase polymerization, on the other hand, the catalyst on the basis of tartaric acid gives a polymerization rate of 6.8 kg/(g.hour), and those on the basis of oxalic acid and methylsulphonic acid give polymerization rates of only 0.6 kg/(g.hour). The influence of the acid/palladium molar ratio in the catalyst composition on the polymerization rate in the gas phase polymerization and on the molecular weight of the prepared copolymer can be seen by comparing examples 6, 7 and 8. By decreasing this molar ratio from 20 to 10.5 to 4.2 the polymerization rate decreases from 6.6 to 3.8 to 1.9 kg copolymer/(g palladium.h) and the molecular weight increases which is apparent from an increase of the LVN from 3.8 to 4.6 to 4.9 dl/g.

It was established by $^{13}C$-NMR analysis that the carbon monoxide/ethene copolymers prepared according to examples 1-11 were built up of linear chains in which the units from carbon monoxide and the units from ethene occurred in a substantially alternating order.

## Claims

1. Process for the preparation of polymers, characterized in that linear polymers of carbon monoxide with one or more olefinically unsaturated compounds in which polymers the units originating from carbon monoxide and the units originating from the olefinically unsaturated compounds are present in a substantially alternating order are prepared by contacting the monomers at elevated temperature and pressure and substantially in the absence of a liquid non-polymerizable diluent with a catalyst based on
   a) a Group VIII metal compound,
   b) an anion of an acid with a pKa of at least 2, in a quantity of at least 5 mol per mol of the Group VIII metal, and
   c) a dentate ligand containing at least two phosphorus-, nitrogen- or sulphur-containing dentate groups which dentate ligand can form a complex with the Group VIII metal.

2. Process in accordance with claim 1, characterized in that the polymerization is carried out in the presence of an alcohol, such as methanol, of which alcohol the quantity is chosen so small that during the polymerization the alcohol occurs substantially in the gas phase.

3. Process in accordance with claim 1 or 2, characterized in that the polymerization is carried out in the presence of a small quantity of hydrogen.

4. Process in accordance with one or more of claims 1-3, characterized in that the catalyst is present on a carrier material, such as a polymer whose structure and composition substantially correspond with the polymer to be prepared.

5. Process in accordance with one or more of claims 1-4, characterized in that the catalyst contains palladium as Group VIII metal and as component c) a compound with the general formula $(R^1)_2$-R-P$(R^1)_2$ in which $R^1$ is an optionally polarly substituted hydrocarbyl group and R represents a divalent organic bridging group containing at least two carbon atoms in the bridge.

6. Process in accordance with one or more of claims 1-5, characterized in that the catalyst contains an anion of an acid with a pKa of less than 6 as component b).

7. Process in accordance with one or more of claims 1-6, characterized in that the catalyst contains 7-200 mol of component b) per mol Group VIII metal.

8. Process in accordance with claim 7, characterized in that the catalyst contains 10-100 mol of component b) per mol Group VIII metal.

9. Process in accordance with claim 5, characterized in that the catalyst contains 0.75-1.5 mol component c) per mol Group VIII metal.

10. Process in accordance with one or more of claims 1-9, characterized in that the catalyst additionally contains an organic oxidant, such as an organic nitrocompound, as component d) in a quantity of 10-1000 mol per mol Group VIII metal.

11. Process in accordance with one or more of claims 1-10, characterized in that as olefinically unsaturated compounds one or more hydrocarbons are used such as ethene or a mixture of ethene with another olefinically unsaturated hydrocarbon such as propene, in that per mol of olefinically unsaturated compound to be polymerized a quantity of catalyst is used which contains $10^{-6}$ - $10^{-4}$ mol Group VIII metal, and in that it is carried out at a temperature of 30-130 °C, a pressure of 5-100 bar and a molar ratio of the olefinically unsaturated compounds relative to carbon monoxide of 5:1 to 1:5.